# EUROPÄISCHE PATENTANMELDUNG

(11) **EP 0 858 886 A2**
(43) Veröffentlichungstag der Anmeldung: **19.08.1998**
(21) Anmeldenummer: 98102140.5
(22) Anmeldetag: 07.02.1998
(51) Int. Cl.: B32B 27/32

(54) **Mehrschichtige Polyolefinfolie**

(30) Priorität: 12.02.1997 DE 19705293
(71) Anmelder: PERGAPLASTIC GMBH, 74731 Walldürn-Altheim (DE); WKP Württ. Kunststoffplatten-Werke GmbH & Co. KG, W-7441 Unterensingen (DE)
(72) Erfinder: Paul, Fritz, 74736 Hardheim (DE); Haller, Heinz, Dr., 73207 Plochingen (DE)
(74) Vertreter: Kratzsch, Volkhard, Dipl.-Ing.

(57) **Zusammenfassung**

Die Erfindung betrifft eine mehrschichtige Polyolefinfolie, die als coextrudierte Folie hergestellt ist und zumindest zwei Schichten aufweist, von denen eine Schicht als Dekorationsschicht dient und die zweite Schicht unter Einwirkung höherer Temperaturen leichtfließend ist. Die Erfindung besteht in der Verwendung einer solchen mehrschichtigen Polyolefinfolie zur thermischen Kaschierung von Werkstoffen mittels Temperatur und Druck ohne zusätzlichen Einsatz von Klebstoffen, wobei die zweite Schicht der Werkstoffoberfläche zugewandt ist.

## Beschreibung

Die Erfindung bezieht sich auf eine mehrschichtige Polyolefinfolie, die als coextrudierte Folie hergestellt ist und zumindest zwei Schichten aufweist, von denen eine Schicht als Oberschicht dient und die zweite Schicht unter Einwirkung höherer Temperaturen leichtfließend ist.

Die Erfindung besteht in der Verwendung einer derartigen vorgenannten mehrschichtigen Polyolefinfolie zur thermischen Kaschierung von Werkstoffen mittels Temperatur und Druck ohne zusätzlichen Einsatz von Klebstoffen, wobei die zweite Schicht der Werkstoffoberfläche zugewandt ist.

Mehrschichtige Polyolefinfolien vorgenannter Art sind als solche bekannt und werden bisher im Verpackungsbereich z. B. als Verpackungsfolien bei Lebensmitteln verwendet. Ein Einsatz als Kaschierfolie hingegen ist nicht bekannt und auch nicht in sonstiger Weise angeregt. Vielmehr werden Werkstoffbeschichtungen, z. B. Holzwerkstoffbeschichtungen, z. B. solche für Möbelteile, in herkömmlicher Weise aus PVC-haltigen Substraten gefertigt, wobei diese PVC-Folien anschließend gedruckt und zum Teil beschichtet und dann mittels Folien-Klebstoffen auf den Werkstoff kaschiert werden. Es bedarf hierzu der genannten, lösemittelhaltigen Folien-Klebstoffe als zusätzliche Materialien. Es ist ferner bekannt, zum Kaschieren von Werkstoffen Papierfolien ebenfalls unter Einsatz lösungsmittelhaltiger Folien-Klebstoffe zu verwenden. Der Einsatzbereich von Papierfolien ist klein, weswegen in überwiegendem Maße PVC-Folien zur thermischen Kaschierung zum Einsatz kommen. Bekanntlich sind PVC-Folien hinsichtlich der Herstellung, Verarbeitung, Verwertung und der Behandlung als Abfall in hohem Maße problematisch. Die Herstellung ist mit unerwünschten Emissionen verbunden, deren Vermeidung beherrscht werden muß und großen Aufwand bedingt. Etwaige Produktionsausschüsse, Müll oder sonstige Reste sind einer Verbrennung od. dgl. thermischen Verwertung nicht zugänglich. Sie sind als Sondermüll zu behandeln und werfen damit verbundene Abfallprobleme auf.

Durch die erfindungsgemäße Verwendung einer mehrschichtigen coextrudierten Polyolefinfolie zur thermischen Kaschierung von Werkstoffen ohne zusätzlichen Einsatz von Folien-Klebstoffen werden diese Nachteile beseitigt. Die verwendete Polyolefinfolie kann emissionsfreihergestellt und anschließend mit lösemittelfreien Lacken bedruckt und lackiert werden und ist somit bereits als Folie vorteilhafter als bekannte PVC-Folien. Bei der erfindungsgemäßen Verwendung bedarf es beim thermischen Kaschieren keiner zusätzlichen lösemittelhaltigen Klebesysteme; denn die zweite Schicht der coextrudierten Polyolefinfolie , die unter Einwirkung höherer Temperaturen leichtfließend ist, übernimmt beim Kaschieren die Aufgabe der sonst in bekannter Weise verwendeten Folien-Klebstoffe. Vorteilhaft ist ferner, daß Produktionsausschüsse, Müll und dgl. Reststücke sowie gleichermaßen aus derart kaschierten Werkstoffen hergestellte Gegenstände, z. B. Möbel, Möbelteile od. dgl., einer thermischen Verwertbarkeit zugänglich sind. Sie können thermisch verbrannt werden, da die aufkaschierten Polyolefinfolien und bei Holzwerkstoffen als damit kaschierte Werkstoffe auch diese rückstandsfrei verbrennen. Die Polyolefinfolie verbrennt dabei zu CO₂ + H₂0. Ein etwaiger entstehender Sondermüll ist vermieden. Dadurch wird das Müllaufkommen reduziert. Von Vorteil ist ferner, daß die Hersteller solcher Gegenstände, die aus erfindungsgemäß kaschierten Werkstoffen hergestellt sind, im Fall einer etwaigen Rücknahmeverpflichtung aufgrund der thermischen Verwertbarkeit, z. B. durch Verbrennung, nicht vor Probleme gestellt werden.

Zur Erreichung aller, z. B. für eine Holzdekorfolie benötigten Eigenschaften wird eine mehrschichtige Polyolefincoextrusionsfolie aus zumindest zwei Schichten auf einer Mehrschichtfolienanlage hergestellt. Im Oberschichtbereich übernimmt die Folie daran gestellte Dekoranforderungen. Hinsichtlich der zweiten Schicht, die unter Einwirkung höherer Temperaturen leichtfließend ist, hat die Folie die notwendigen Eigenschaften für die thermische Kaschierung ohne Einsatz zusätzlicher Klebstoffe. Beim Kaschieren wird die am Werkstoff anliegende Seite der mehrschichtigen Polyolefinfolie , d. h. die zweite Schicht, bei der thermischen Kaschierung mittels Temperatur und Druck aufgeschmolzen, wobei das Polyolefin in Oberflächenvertiefungen, z. B. Poren, Fasern od. dgl. Räume, des zu kaschierenden Werkstoffes hineinfließt. Bedingt durch eine hohe Festigkeit und Zähigkeit bereits im schmelzförmigen Zustand erfolgt eine feste Verbindung zwischen der Folie und dem Werkstoff. Das nach dem Erkalten wieder verfestigte Polyolefin ist nahezu untrennbar mit dem Werkstoff verbunden.

Weitere erfindungsgemäße und vorteilhafte Verwendungen ergeben sich aus den Ansprüchen 2 bis 18. Von besonderem Vorteil ist dabei die Verwendung einer mehrschichtigen, coextrudierten Polyäthylenfolie.

Die Erfindung bezieht sich ferner auf ein Verfahren zum thermischen Kaschieren von Werkstoffen mit einer Kunststofffolie und besteht in einem Verfahren entsprechend den Merkmalen des Anspruchs 19. Weitere Verfahrensschritte und Ausgestaltungen des Verfahrens sind in den Ansprüchen 20 bis 22 wiedergegeben.

Der vollständige Wortlaut der Ansprüche ist vorstehend allein zur Vermeidung unnötiger Wiederholugen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind auch alle in der vorstehenden Beschreibung erwähnten Merkmale weitere Bestandteile der Erfindung, auch wenn sie nicht besonders in den Ansprüchen erwähnt sind.

## Patentansprüche

1. Mehrschichtige Polyolefinfolie, die als coextrudierte Folie hergestellt ist und zumindest zwei Schichten aufweist, von denen eine Schicht als Oberschicht dient und die zweite Schicht unter Einwirkung höherer Temperaturen leichtfließend ist,
**gekennzeichnet durch**
deren Verwendung zur thermischen Kaschierung von Werkstoffen mittels Temperatur und Druck ohne zusätzlichen Einsatz von Klebstoffen, wobei die zweite Schicht der Werkstoffoberfläche zugewandt ist.

2. Verwendung einer mehrschichtigen Polyolefinfolie nach Anspruch 1, bei der die zweite Schicht bei Temperaturen über 70°C leichtfließend wird und schmilzt.

3. Verwendung einer mehrschichtigen Polyolefinfolie nach Anspruch 1 oder 2, bei der die zweite Schicht im aufgeschmolzenen und leichtfließenden Zustand und unter Druck in Poren, Fasern od. dgl. Vertiefungen der Werkstoffoberfläche hineinfließt und sich nach dem Erkalten wieder verfestigt unter Herstellung einer im wesentlichen untrennbaren Verbindung mit dem Werkstoff.

4. Verwendung einer mehrschichtigen Polyolefinfolie nach einem der Ansprüche 1 bis 3, bei der die zweite Schicht im schmelzförmigen Zustand eine hohe Zähigkeit und Festigkeit aufweist.

5. Verwendung einer mehrschichtigen Polyolefinfolie nach einem der Ansprüche 1 bis 4, bei der die erste Schicht auf der Seite, die der zweiten Schicht abgewandt ist, dekorierfähig, insbesondere bedruckbar, ist und als Dekorationsschicht dient.

6. Verwendung einer mehrschichtigen Polyolefinfolie nach einem der Ansprüche 1 bis 5, bei der die erste Schicht auf der Seite, die der zweiten Schicht abgewandt ist, mit einem Schutzüberzug versehen ist.

7. Verwendung einer mehrschichtigen Polyolefinfolie nach einem der Ansprüche 1 bis 6, bei der zwischen der ersten Schicht und der zweiten Schicht eine Mittelschicht vorgesehen ist.

8. Verwendung einer mehrschichtigen Polyolefinfolie nach Anspruch 7, bei der die Mittelschicht dunkel, z. B. grau oder schwarz, eingefärbt ist zur Erzielung von Opazität.

9. Verwendung einer mehrschichtigen Polyolefinfolie nach einem der Ansprüche 1 bis 8, die tiefziehfähig und beim Tiefziehen reißfest ist.

10. Verwendung einer mehrschichtigen Polyolefinfolie nach einem der Ansprüche 1 bis 9, die aus einer Polyäthylenfolie besteht.

11. Verwendung einer mehrschichtigen Polyolefinfolie nach einem der Ansprüche 1 bis 9, wobei der Werkstoff eine offenporige Oberfläche aufweist.

12. Verwendung einer mehrschichtigen Polyolefinfolie nach einem der Ansprüche 1 bis 11, wobei der Werkstoff eine faserige Oberfläche aufweist.

13. Verwendung einer mehrschichtigen Polyolefinfolie nach einem der Ansprüche 1 bis 12, wobei der Werkstoff zumindest auf seiner Oberfläche aus Hartwerkstoff besteht.

14. Verwendung einer mehrschichtigen Polyolefinfolie nach einem der Ansprüche 1 bis 13, wobei der Werkstoff zumindest auf seiner Oberfläche aus Holzwerkstoff besteht.

15. Verwendung einer mehrschichtigen Polyolefinfolie nach einem der Ansprüche 1 bis 14, wobei der Werkstoff aus Faserwerkstoff, insbesondere Holzfaserwerkstoff, besteht.

16. Verwendung einer mehrschichtigen Polyolefinfolie nach einem der Ansprüche 1 bis 15, wobei der Werkstoff aus mitteldichtem Faserwerkstoff, insbesondere Holzfaserwerkstoff, besteht.

17. Verwendung einer mehrschichtigen Polyolefinfolie nach einem der Ansprüche 1 bis 13, wobei der Werkstoff zumindest auf seiner Oberfläche aus Kunststoff besteht.

18. Verwendung einer mehrschichtigen Polyolefinfolie nach einem der Ansprüche 1 bis 13, wobei der Werkstoff zumindest auf seiner Oberfläche aus Metall besteht.

19. Verfahren zum thermischen Kaschieren von Werkstoffen mit einer Kunststofffolie,
**dadurch gekennzeichnet**,
daß als Kunststofffolie eine mehrschichtige coextrudierte Polyolefinfolie, die zumindest zwei Schichten aufweist, von denen eine Schicht als Oberschicht dient und die zweite Schicht unter Einwirkung höherer Temperaturen schmelzförmig und leichtfließend wird, mit der zweiten Schicht der Werkstoffoberfläche zugewandt auf den Werkstoff aufgebracht und auf diesem ohne zusätzlichem Einsatz von Klebstoffen kaschiert wird.

20. Verfahren nach Anspruch 19,
**dadurch gekennzeichnet**,
daß die zweite Schicht unter Einwirkung von höheren Temperaturen, z. B. über 70°C, und von Druck in einen schmelzförmigen und leichtfließenden Zustand versetzt wird, derart, daß ein Hineinfließen in Poren, Fasern od. dgl. Vertiefungen der Werkstoffoberfläche geschieht, und daß danach das Polyolefin erkaltet und sich wieder verfestigt unter Erzeugung einer nahezu untrennbaren Verbindung mit dem Werkstoff.

21. Verfahren nach Anspruch 19 oder 20,
**dadurch gekennzeichnet**,
daß man mit der mehrschichtigen, coexdrudierten Polyolefinfolie Holzwerkstoffe kaschiert, z. B. für Türen, Wände, Wandteile, Möbelteile, Innenteile, Schubladen, Zargen od. dgl.

22. Verfahren nach einem der Ansprüche 19 bis 21,
**dadurch gekennzeichnet**,
daß man die mehrschichtige, coextrudierte Polyolefinfolie durch Warmwalzen aufkaschiert.

23. Verfahren nach einem der Ansprüche 19 bis 22,
**dadurch gekennzeichnet,**
daß die mehrschichtige, coextrudierte Polyolefinfolie aus einer Polyäthylenfolie besteht.
